# EUROPÄISCHE PATENTSCHRIFT

(11) **EP 3 156 270 B1**
(45) Veröffentlichungstag und Bekanntmachung des Hinweises auf die Patenterteilung: **11.09.2019**
(21) Anmeldenummer: 16001690.3
(22) Anmeldetag: 29.07.2016
(51) Int. Cl.: B60G 17/08, B60G 17/018, B60G 17/0165

(54) **VERFAHREN UND VORRICHTUNG ZUR ANPASSUNG DER DÄMPFERKRAFT VERSTELLBARER DÄMPFER IN KRAFTFAHRZEUGEN**
METHOD AND DEVICE FOR ADAPTING THE DAMPING FORCE OF ADJUSTABLE AUTOMOTIVE DAMPERS IN MOTOR VEHICLES
PROCEDE ET DISPOSITIF D'ADAPTATION DE LA FORCE D'AMORTISSEMENT D'AMORTISSEURS REGLABLES DANS DES VEHICULES AUTOMOBILES

(30) Priorität: 15.10.2015 DE 102015013427
(43) Veröffentlichungstag der Anmeldung: 19.04.2017
(73) Patentinhaber: MAN Truck & Bus SE, 80995 München (DE)
(72) Erfinder: Maisel, Andreas, 85276 Pfaffenhofen (DE); Wagner, Philipp, 86316 Friedberg (DE)
(74) Vertreter: v. Bezold & Partner Patentanwälte - PartG mbB

(56) Entgegenhaltungen:
- DE-A1- 19 911 665
- DE-A1-102006 039 353
- DE-A1-102008 031 947
- DE-A1-102010 011 093
- DE-A1-102012 218 937
- DE-A1-102013 018 927
- DE-A1-102015 205 369
- JP-A- 2006 349 607
- US-B1- 6 531 959

## Beschreibung

Die Erfindung betrifft ein Verfahren zur Anpassung der Dämpferkraft verstellbarer Dämpfer in Kraftfahrzeugen nach dem Oberbegriff des Anspruchs 1. Die Erfindung betrifft eine Vorrichtung zur Anpassung der Dämpferkraft verstellbarer Dämpfer in Kraftfahrzeugen nach dem Oberbegriff des Anspruchs 8.

Bei der Auslegung von Fahrwerkregelsystemen ist stets ein Kompromiss notwendig zwischen Komfort und Fahrsicherheit. Ein ideales Fahrwerk soll die durch Fahrbahnunebenheiten angeregten Schwingungen möglichst gut dämpfen und gleichzeitig die Radaufstandskräfte möglichst konstant auf einem vorgegebenem Wert halten, weil hierdurch die Räder das höchste Längs- und Seitenführungspotential haben und das Fahrzeug mit optimaler Sicherheit führen.

Die gegenwärtig vorhandenen Dämpfersysteme in Fahrzeugen sind in drei Gruppen einteilbar: passive, semiaktive und aktive Dämpfersysteme. Bei passiven Dämpfersystemen sind die Größe und die Richtung der von dem Dämpfer ausgeübten Kraft nur abhängig von der relativen Geschwindigkeit des Dämpfers. In passiven Dämpfersystemen ist eine Veränderung der Dämpferkraftkennlinie während des Fahrbetriebes nicht vorgesehen. Die Abstimmung eines Fahrzeugs mit passiven Stoßdämpfern stellt immer nur einen Kompromiss dar, da unterschiedliche Fahrzustände mit derselben Fahrwerkseinstellung abgedeckt werden müssen.

Eine Lösung für diesen Zielkonflikt besteht im Einsatz semiaktiver Stoßdämpfer, die es ermöglichen, die Dämpferkennlinien über einen weiten Bereich per elektronischer Ansteuerung zu verändern und damit für unterschiedliche Fahrsituationen innerhalb weniger Millisekunden eine optimale Dämpfereinstellung bereitzustellen. Aber auch für unterschiedliche Beladungszustände, die insbesondere im Nutzfahrzeug große Unterschiede bezüglich Gesamtmasse und Schwerpunktslage bewirken können, können geeignete Dämpfervoreinstellungen gewählt werden, die einer einzigen Abstimmung passiver Dämpfer überlegen sind.

Bei semiaktiven Dämpfersystemen kann deren Kennlinie während der Fahrt schnell und über einen weiten Bereich verändert werden. Insbesondere können solche Stoßdämpfer auf (proportionalen) Verstellventilen beruhen, die den Ölfluss verändern, oder auf magneto- oder elektrorheologischen Flüssigkeiten, wobei ein magnetisches oder elektrisches Feld die Viskosität der Flüssigkeit und damit die Dämpfkraft beeinflusst. Es sind auch Kombinationen der Technologien aus der Praxis bekannt. Auf diese Art und Weise können verschiedene Regelungsprogramme mittels eines Stellelementes in Abhängigkeit von der aktuellen Fahrsituation die optimale Dämpferkraft einstellen. Bei aktiven Dämpfersystemen wird über einen Aktuator die gewünschte Kraft in jeglicher Richtung bereitgestellt, unabhängig von der relativen Geschwindigkeit des Dämpfers.

Aus der Praxis sind semiaktive oder aktive Dämpfersysteme bekannt, die auf die Aufhängung bezogene Anpassungen basierend auf Straßenzuständen ausführen, wenn diese durch das Fahrzeug erfahren oder von diesem angetroffen werden. Die Anpassung des Dämpfersystems erfolgt beispielsweise erst beim bzw. nach dem Überfahren von Bodenwellen oder dergleichen. Dies liegt daran, dass die Informationen der von der Fahrwerksregelung verwendeten Sensoren, die beispielsweise der Erfassung einer vertikalen Fahrzeugaufbaubeschleunigung oder der an Radfedereinrichtungen des Kraftfahrzeugs auftretenden Federwege dienen, erst dann zur Verfügung stehen, wenn die Fahrbahnanregungen bereits auf den Fahrzeugaufbau einwirken. Solche Systeme werden üblicherweise als Rückkopplungssysteme bezeichnet. Es kann jedoch schwierig sein, innerhalb einer kurzen Zeitspanne einen gegenwärtigen Straßenzustand zu detektieren, den Straßenzustand zu bewerten und geeignete Anpassungen an dem Fahrzeugaufhängungssystem auszuführen. Dies gilt insbesondere dann, wenn das Fahrzeug mit einer hohen Geschwindigkeit gefahren wird, da die Verzögerungszeit zwischen dem Antreffen eines Straßenzustandes und einer entsprechenden Anpassung des Dämpfersystems durch das Rückkopplungssystem zu lang sein kann.

Es ist daher aus dem Stand der Technik bekannt, diese Nachteile durch die Verwendung einer vorausschauenden Sensorik zu vermeiden, mittels derer das aktive oder semiaktive Dämpfersystem präventiv gesteuert bzw. geregelt wird. So offenbart beispielsweise die Offenlegungsschrift DE 10 2012 218 937 A1 ein Verfahren zur Anpassung der Dämpferkraft verstellbarer Dämpfer in Kraftfahrzeugen, wobei die Anpassung in Abhängigkeit von mindestens einer Straßeninformation erfolgt, die unter Verwendung der Ausgabedaten mindestens einer Kamera ermittelt wird und die ein Objekt und/oder eine Änderung der Straßenoberfläche in einem in Fahrtrichtung des Kraftfahrzeugs vorausliegenden Straßensegment betreffen.

Bei Erkennung eines Objekts oder einer Änderung der Straßenoberfläche auf dem vorausliegenden Straßensegment kann bereits vor Erreichen des Objekts oder der geänderten Straßenoberfläche ein komfort- oder sicherheitsoptimiertes Regelverhalten zum Überfahren der erkannten Stelle ausgewählt werden, und entsprechende Gegenmaßnahmen können durch geeignete Ansteuerung des aktiven oder semiaktiven Fahrwerks eingeleitet werden.

Gattungsgemäße Verfahren sind ebenfalls aus den Offenlegungsschriften US 2014/0222287 A1, DE 100 50 569 A1, DE 10 2009 009 063 A1 und DE 10 2006 039 353 A1 bekannt.

Im Rahmen der Erfindung wurde festgestellt, dass ein Nachteil der bekannten Ansätze ist, dass Schwankungen in der Ausrichtung des Fahrzeugs zur Fahrbahnoberfläche, insbesondere Nickbewegungen, dazu führen können, dass vorausliegende Objekte kurzzeitig aus dem Kamerasichtfeld verloren gehen können, wodurch eine zuverlässige vorausschauende Erkennung und Entfernungsbestimmung der vorausliegenden Objekte erschwert wird.

Aus der Offenlegungsschrift DE 10 2015 205 369 A1 ist ein Verfahren zur Steuerung der Dämpfungsmittel eines Fahrzeugs auf Basis von optisch erfassten Informationen bekannt, bei welchem zur Kompensation der Eigenbewegungen des Fahrzeugaufbaus eine Korrektur der optisch erfassten Daten durchgeführt wird. Diese dient einem besseren Erkennen der Objekte, das heißt einem deutlicheren Registrieren der Objektsignalform in den mit Nickbewegungen überlagerten Daten. Eine Korrektur des Objektabstands, welcher durch den Nickwinkel des Fahrzeugs ebenfalls verfälscht sein kann, findet nicht statt.

Es ist somit eine Aufgabe der Erfindung, ein verbessertes gattungsgemäßes Verfahren und eine gattungsgemäße Vorrichtung bereitzustellen, mit denen Nachteile herkömmlicher Ansätze vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Anpassung der Dämpferkraft verstellbarer Dämpfer eines Kraftfahrzeugs bereitgestellt, bei dem in an sich bekannter Weise die Anpassung der Dämpferkraft in Abhängigkeit von mindestens einer Straßeninformation erfolgt, die unter Verwendung der Ausgabedaten mindestens einer Kamera ermittelt wird und die ein Objekt und/oder eine Änderung der Straßenoberfläche in einem in Fahrtrichtung des Kraftfahrzeugs vorausliegenden Straßensegment betreffen.

Die verstellbaren Dämpfer können Teil eines Feder-Dämpfer-Systems des Fahrwerks des Kraftfahrzeugs sein und insbesondere als semi-aktive Dämpfer ausgeführt sein. Das Kraftfahrzeug kann ein Nutzfahrzeug sein.

Der Ausdruck "Straßeninformationen", wie er hier verwendet wird, umfasst alle Typen von Bildern, Koordinaten, Daten und/oder anderen Informationen, die das in Fahrtrichtung vorausliegende Straßensegment betreffen. Einige Beispiele geeigneter Straßeninformationen umfassen: Kamera-Rohbilder (zusammengefügt oder nicht zusammengefügt), verarbeitete Kamerabilder und/oder spezielle Stücke von Daten oder Informationen, die anhand der Kamerabilder entnommen oder abgeleitet sind, um verschiedene Möglichkeiten zu nennen. Die Straßeninformationen können Objekte auf der Straße wie z. B. ein Schlagloch, eine Bodenwelle oder ein auf der Straße liegender Gegenstand sein und/oder Änderungen der Straßenoberfläche wie z. B. Übergänge zwischen Beton, Asphalt, Kopfsteinpflaster, Schotter, Schmutz usw. offenlegen oder identifizieren. Die aus den Ausgabedaten der mindestens einen Kamera ermittelten Straßeninformationen können auch eine Distanzinformation umfassen, die eine Position, einen Abstand und/oder eine Zeit bis zum Erreichen des Objekts und/oder der Änderung der Straßenoberfläche angibt.

Gemäß dem Verfahren wird eine Distanzinformation, die einen Abstand des Objekts und/oder der Änderung der Straßenoberfläche angibt, in Abhängigkeit von einem Nickwinkel des Fahrzeugaufbaus bezüglich einer Aufbaulängsachse, d. h. der Neigung des Fahrzeugaufbaus relativ zur Straße, bestimmt. Der Nickwinkel wird aus den Ausgabesignalen mindestens eines Federwegsensors einer Federungseinrichtung des Fahrwerks ermittelt. Federwegsensoren können bereits vorhanden sein, so dass in diesem Fall bereits vorhandene Sensordaten zur Bestimmung des Nickwinkels genutzt werden können, um die Signalqualität der Ausgabedaten der mindestens einen Kamera zu verbessern.

Ein besonderer Vorzug der Erfindung liegt ferner darin, dass bei der Ermittlung der Distanzinformation eine mögliche Nickbewegung des Fahrzeugs berücksichtigt wird. Hierdurch erhöhen sich die Sicherheit und Genauigkeit, mit der Objekte und/oder Änderungen der Straßenoberfläche erkannt werden können. Insbesondere können mittels des Nickwinkels der korrekte Abstand zu einem erfassten Objekt und/oder Änderungen der Straßenoberfläche bestimmt werden. Erfindungsgemäß wird ein aus den Ausgabedaten der mindestens einen Kamera ermittelter Abstand des Objekts oder die Änderung der Straßenoberfläche bei einem negativen Nickwinkel hin zu einem kleineren Wert und/oder bei einem positiven Nickwinkel hin zu einem größeren Wert korrigiert werden. Dadurch wird eine genauere Entfernungsbestimmung erzielt.

Vorzugsweise werden die Sensordaten mindestens zweier Federwegsensoren benutzt, wobei ein erster Federwegsensor an einer vorderen Achse und ein zweiter Federwegsensor an einer hinteren Achse die Vertikalbewegung des Fahrzeugsaufbaus relativ zur Straße misst. Der Nickwinkel kann dann beispielsweise durch Abgleich der Sensorwerte an der vorderen Achse und der hinteren Achse bestimmt werden. Hier gibt eine Differenz dieser Sensorwerte, falls diese jeweils zum gleichen Zeitpunkt erfasst werden, ein Maß für den aktuellen Nickwinkel an.

Gemäß einer weiteren Ausführungsform umfassen die Straßeninformationen eine Objektgröße des Objekts. Gemäß dieser Ausführungsform wird die Objektgröße in Abhängigkeit von dem Nickwinkel des Fahrzeugaufbaus ermittelt und/oder korrigiert. Dadurch kann eine Fehleinschätzung der Objektgröße anhand der Ausgabedaten der Kamera korrigiert werden.

Eine weitere bevorzugte Ausgestaltungsform der Erfindung sieht vor, dass der Nickwinkel in Abhängigkeit von Ausgabesignalen mindestens eines Beschleunigungssensors zur Erfassung einer Beschleunigung des Fahrzeugaufbaus ermittelt wird. Durch die Verwendung des mindestens einen Beschleunigungssensors kann ermittelt werden, inwieweit aus den Bewegungen der Federwegsensoren auf Änderungen des Nickwinkels geschlossen werden kann. Beispielsweise können die Ausgabesignale des mindestens einen Beschleunigungssensors verwendet werden, um zu ermitteln, ob eine Ausfederungsbewegung des Fahrzeugaufbaus oder ob eine Nickbewegung vorliegt. Falls keine Ausfederungsbewegung, sondern eine Nickbewegung vorliegt, kann ein Wert des Nickwinkels dann in Abhängigkeit von den Ausgabesignalen des mindestens einen Federwegsensors ermittelt und zur Korrektur der Distanzinformation verwendet werden.

So kann z. B. durch ein Schlagloch ein Rad ausfedern, d. h., die Werte für den Federwegsensor werden größer, aber die Fahrzeugneigung (Nickwinkel) verändert sich nur unwesentlich. Mit den Beschleunigungssensoren am Aufbau kann ein Abgleich der Sensorsignale erfolgen und somit eine Plausibilisierung, inwiefern sich die Fahrzeugausrichtung, insbesondere der Nickwinkel, verändert.

Durch eine Plausibilisierung von Kartendaten bzw. Daten aus einem Navigationssystem mit den Ausgabedaten des Kamerasystems kann die Güte der Signalauswertung für den Fahrbahnverlauf weiter gesteigert werden. Steigt z. B. die Fahrbahn vor dem Fahrzeug an, so können dadurch ebenfalls die Entfernung zum Objekt und die Objektgröße falsch berechnet werden, falls nur Ausgabedaten der Kamera ausgewertet werden. Gemäß einer weiteren Ausführungsform wird daher anhand von Kartendaten, z. B. bereitgestellt durch ein Navigationsgerät, eine Steigungsinformation ermittelt, die eine Steigung oder einen Steigungsverlauf des vorausliegenden Straßensegments angibt. In Abhängigkeit von der ermittelten Steigungsinformation kann dann die Distanzinformation und/oder eine Objektgröße des Objekts korrigiert werden.

Das Verfahren umfasst ferner in an sich bekannter Weise die Schritte der Bestimmung einer präventiven Anpassung der Dämpferkraft der verstellbaren Dämpfer in Abhängigkeit von der mindestens einen Straßeninformation sowie die Ausführung der präventiven Anpassung der Dämpferkraft, bevor das Fahrzeug das Objekt und/oder die Änderung der Straßenoberfläche in dem vorausliegenden Straßensegment antrifft.

Der verstellbare Dämpfer kann ein semiaktiver Stoßdämpfer eines Fahrwerks sein, insbesondere ein Dämpfer mit proportionalventilgesteuerter Dämpfung. Gemäß einem zweiten Gesichtspunkt der Erfindung wird eine Vorrichtung zur Anpassung der Dämpferkraft verstellbarer Dämpfer eines Kraftfahrzeugs, insbesondere eines Nutzfahrzeugs mit semiaktiven Dämpfersystemen, bereitgestellt. Die Vorrichtung ist ausgebildet, das Verfahren, wie in diesem Dokument beschrieben, auszuführen.

Die Vorrichtung ist insbesondere ausgebildet, unter Verwendung von Ausgabedaten mindestens einer Kamera mindestens eine Straßeninformation zu ermitteln, die ein Objekt und/oder eine Änderung der Straßenoberfläche in einem in Fahrtrichtung des Kraftfahrzeugs vorausliegenden Straßensegment betreffen. Die Vorrichtung ist ferner ausgebildet, eine Distanzinformation, die eine Position, einen Abstand und/oder eine Zeit bis zum Erreichen des Objekts und/oder der Änderung der Straßenoberfläche angibt, in Abhängigkeit von einem Nickwinkel des Fahrzeugaufbaus bezüglich einer Aufbaulängsachse zu ermitteln und den Nickwinkel aus den Ausgabesignalen mindestens eines Federwegsensors einer Federungseinrichtung des Fahrwerks zu ermitteln. Die Vorrichtung ist ferner eingerichtet, den aus den Ausgabedaten der mindestens einen Kamera (4) ermittelten Abstand (d) des Objekts (7) und/oder der Änderung der Straßenoberfläche bei einem negativen Nickwinkel (α) hin zu einem kleineren Wert und bei einem positiven Nickwinkel (α) hin zu einem größeren Wert zu korrigieren.

Die Vorrichtung kann ferner ausgebildet sein, eine präventive Anpassung der Dämpferkraft der verstellbaren Dämpfer in Abhängigkeit von der mindestens einen Straßeninformation zu bestimmen; und eine Stelleinrichtung des Dämpfers zur Ausführung der präventiven Anpassung der Dämpferkraft anzusteuern, bevor das Fahrzeug das Objekt und/oder die Änderung der Straßenoberfläche in dem vorausliegenden Straßensegment antrifft.

Zur Vermeidung von Wiederholungen sollen rein verfahrensgemäß offenbarte Merkmale auch als funktionale Merkmale der Vorrichtung zur Anpassung der Dämpferkraft verstellbarer Dämpfer und damit auch als vorrichtungsgemäß offenbart gelten und beanspruchbar sein.

Die Erfindung betrifft ferner ein Kraftfahrzeug, insbesondere Nutzfahrzeug, mit einer Vorrichtung, wie in diesem Dokument offenbart. Das Kraftfahrzeug umfasst vorzugsweise ferner ein von der Vorrichtung gesteuertes oder geregeltes semiaktives Feder-Dämpfer-System und eine Kamera, die eingerichtet ist, ein in Fahrtrichtung des Kraftfahrzeugs vorausliegendes Straßensegment zu erfassen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Nutzfahrzeugs mit einer Vorrichtung zur Anpassung der Dämpferkraft verstellbarer Dämpfer gemäß einer Ausführungsform der Erfindung;
- Figur 2: ein Ablaufdiagramm zur Illustration eines Verfahrens zur Anpassung der Dämpferkraft verstellbarer Dämpfer eines Feder-Dämpfer-Systems gemäß einer Ausführungsform der Erfindung;
- Figuren 3A - 3C: den Einfluss des Nickwinkels auf die Erfassung von Straßeninformation unter Verwendung einer Kamera (4); und
- Figur 4: den Einfluss der Fahrbahnsteigung auf die Erfassung von Straßeninformation unter Verwendung einer Kamera.

Gleiche oder funktional äquivalente Elemente sind in allen Figuren mit denselben Bezugszeichen bezeichnet.

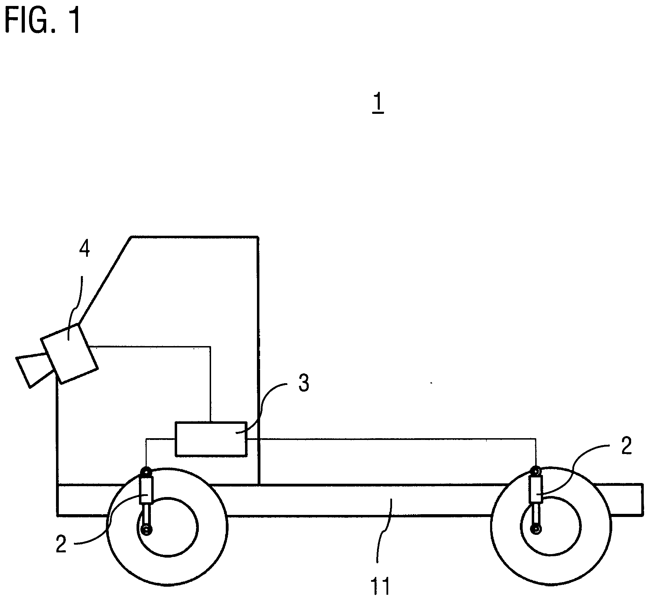

Figur 1 zeigt eine schematische Darstellung eines Nutzfahrzeugs 1, bei dem die Achsen über verstellbare semiaktive Stoßdämpfer 2, nachfolgend auch kurz als Dämpfer bezeichnet, am Fahrzeugaufbau 11 gelagert sind. Im vorliegenden Beispiel sind die Dämpfer 2 als Dämpfer mit kontinuierlicher Dämpfungssteuerung, sogenannte Continuous Damping Control (CDC)-Dämpfer, ausgebildet. Hierbei werden Proportionalventile eingesetzt, die einen Ölfluss verändern, um eine Dämpfungscharakteristik bzw. eine Dämpferkraft per elektronischer Ansteuerung innerhalb kürzester Zeit zu verändern.

An der Fahrzeugfrontseite ist eine Kamera 4 angeordnet, die fortlaufend ein in Fahrtrichtung des Nutzfahrzeugs 1 vorausliegendes Straßensegment 12 erfasst. Das vorausliegende Straßensegment 12 kann ein vorausliegender Straßenabschnitt oder ein vorausliegender Streckenabschnitt der Straße sein. Die Kamera 4 ist vorzugsweise als Stereokamera ausgebildet und kann beispielsweise die bestehende Kamera eines Fahrerassistenzsystems, beispielsweise eine Kamera eines Spurhaltesystems sein. Anstatt einer Stereokamera kann jedoch auch eine Monokamera verwendet werden, wobei dann die Abstandsschätzung aus den Bilddaten softwareseitig aufwändiger ist und im Vergleich zu einer Stereokamera mit einer geringeren Genauigkeit durchgeführt werden kann.

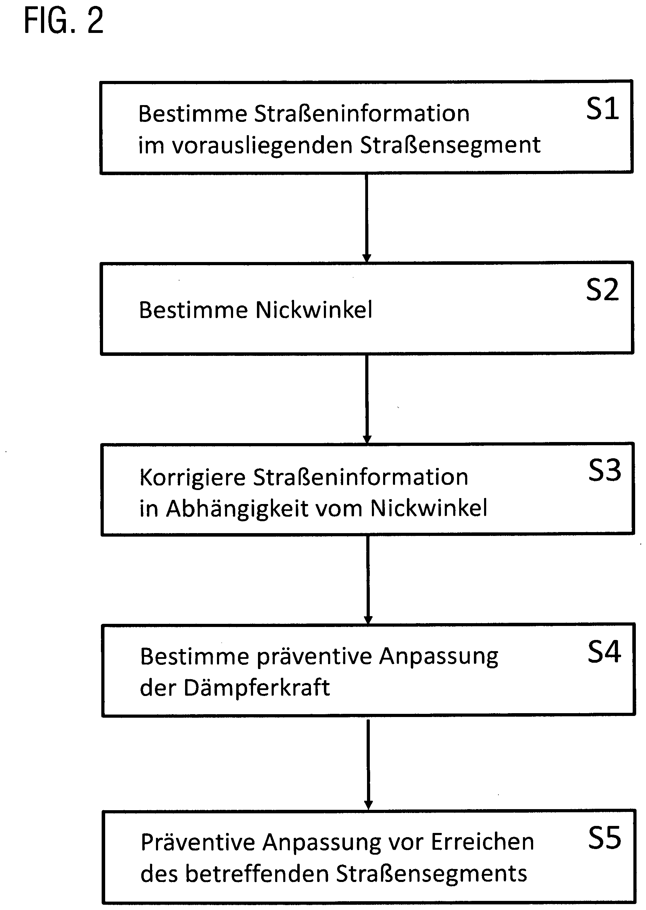

Das Nutzfahrzeug umfasst ferner eine Steuervorrichtung 3, die in Abhängigkeit von den Ausgabedaten der Kamera die Dämpfungscharakteristik der Dämpfer 2 und damit die bei einer gegebenen Belastung wirkende Dämpferkraft anpassen kann. Die Steuervorrichtung 3 ist insbesondere eingerichtet, das Verfahren zur Anpassung der Dämpferkraft verstellbarer Dämpfer durchzuführen, was nachfolgend beispielhaft anhand der Schritte S1 bis S5, wie in Figur 2 dargestellt, beschrieben wird.

Die Steuervorrichtung 3 kann als ein zentrales Steuergerät oder als eine beliebige Vielzahl von elektronischen Verarbeitungseinrichtungen, Speichereinrichtungen und/oder von anderen bekannten Komponenten ausgeführt sein. So kann beispielsweise die von der Steuervorrichtung 3 durchgeführte Bildverarbeitung zur Extraktion der Straßeninformation in einem eigenen Steuergerät für die Dämpferregelung durchgeführt oder alternativ in einem Fremdsteuergerät für andere Assistenzfunktionen oder auch direkt in die Steuereinheit der Kamera integriert sein.

In Schritt S1 werden unter Verwendung der Ausgabedaten der Kamera 4 fortlaufend Straßeninformationen erfasst. Hierbei ist die Steuervorrichtung 3 eingerichtet, die von der Kamera 4 erfassten Bilddaten auszuwerten, um das vorausliegende Straßensegment 12 zu untersuchen, einzuschätzen und/oder auf andere Weise zu bewerten, um daraus Straßeninformationen zu generieren, die dieses Straßensegment betreffen.

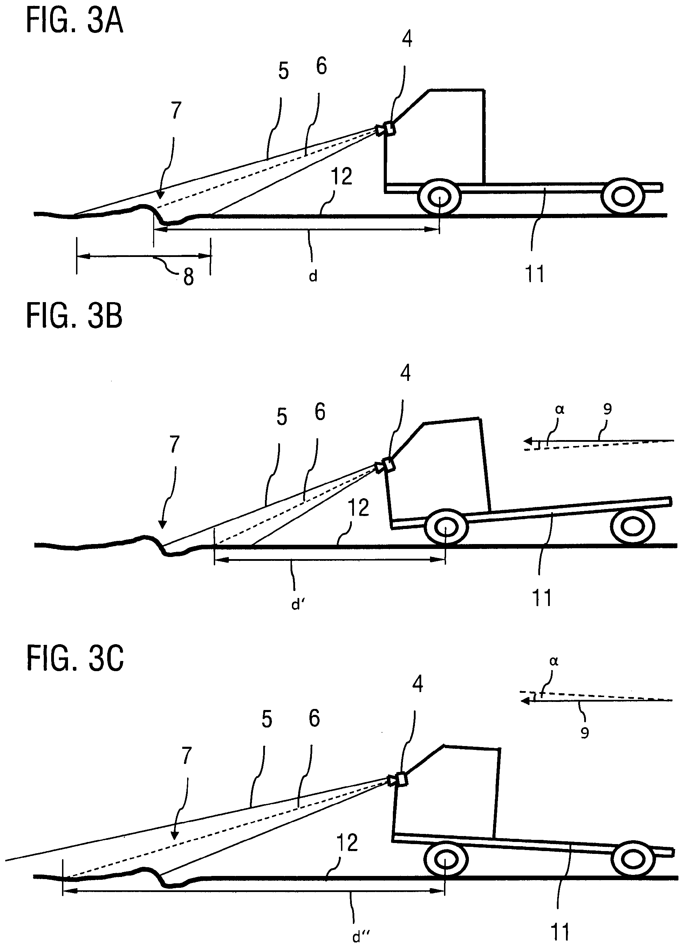

Dies ist beispielhaft in Figur 3A dargestellt. In Figur 3A ist der Sichtkegel 5 der Kamera 4 gezeigt, der fortlaufend ein in Fahrtrichtung des Fahrzeugs 1 vorausliegendes Straßensegment 12 mit einer vorbestimmten Blickrichtung abtastet. In dem in Figur 3A gezeigten Zustand befindet sich aktuell ein Objekt 7 in Form einer Bodenwelle im Sichtfeld 5 der Kamera 4, die auf diese Weise erfasst werden kann. Aus der vorbestimmten Blickrichtung der Kamera kann ferner der Abstand d zu dem Objekt 7 ermittelt werden. Dieser Abstand d entspricht dem Abstand der vorderen Fahrzeugachse bis zur Mittellinie 6 des Sichtkegels 5, wenn die Mittellinie 6 das Objekt 7 erreicht. Der Durchmesser des Sichtkegels 5 ist mit dem Bezugszeichen 8 gekennzeichnet.

Die Generierung der Straßeninformationen aus den Ausgabedaten der Kamera 4 kann mittels bekannter Bildverarbeitungstechniken, wie beispielsweise in den vorstehend genannten Druckschriften aus dem Stand der Technik beschrieben, erfolgen. Die Straßeninformationen geben an, ob sich ein Objekt in dem vorausliegenden Straßenabschnitt 12 befindet. Das Objekt kann beispielsweise ein Schlagloch, eine Bodenwelle oder ein Objekt auf der Fahrbahn sein.

Die Straßeninformationen können auch unterschiedliche Typen von Straßenzuständen in dem bevorstehenden Straßensegment identifizieren, wie beispielsweise eine Änderung der Straßenoberfläche, Risse, Unebenheiten, Schmutz etc. Die Straßeninformationen können ferner eine Größe und eine Distanzinformation des Objekts enthalten. Die Distanzinformation kann z. B. eine Position des Objekts, z. B. die X-, Y-, Z-Koordinaten für jedes der Pixel, die dem Objekt 7 entsprechen, oder einen Abstand vom Fahrzeug bis zu dem Objekt angeben.

In Schritt S2, der zeitgleich zu Schritt S1 durchgeführt wird, wird im Fahrbetrieb fortlaufend ein Nickwinkel α des Fahrzeugaufbaus 11 bezüglich einer Fahrzeugaufbaulängsachse 9 bestimmt. Der Nickwinkel α wird aus den Ausgabesignalen von Federwegsensoren an den Achsen bzw. Rädern ermittelt. Hierbei werden beispielsweise die Sensordaten von Federwegsensoren, die an der Vorderachse angeordnet sind, mit Sensordaten von Federwegsensoren, die an der Hinterachse angeordnet sind, abgeglichen. Hier gibt eine Differenz dieser Sensorwerte, falls diese jeweils zum gleichen Zeitpunkt erfasst werden, ein Maß für den aktuellen Nickwinkel α an.

Die Ermittlung des Nickwinkels α ermöglicht eine verbesserte Auswertung der Kamerasignale, da Nickbewegungen des Fahrzeugs insbesondere eine Schätzung der Entfernung und Größe eines Objekts 7 anhand von Kameradaten verfälschen können. Dies ist durch den Vergleich der Figuren 3A bis 3C erkennbar.

Figur 3A zeigt einen Zustand des Fahrzeugs mit einem Nickwinkel α von null, Figur 3B einen entsprechenden Zustand des Fahrzeugs mit einem negativen Nickwinkel α, bei dem der vordere Bereich des Fahrzeugs im Vergleich zum hinteren Bereich des Fahrzeugs nach unten geneigt ist und Figur 3C einen entsprechenden Zustand des Fahrzeugs mit einem positiven Nickwinkel α.

In Figur 3B ist erkennbar, dass sich der Sichtkegel 5 bei einem negativen Nickwinkel hin zu kleineren Abständen verschiebt. Bei einem negativen Nickwinkel ist der Abstand d' des Sichtkegels, d. h. der Abstand derjenigen Stelle, an der die Mittellinie 6 des Sichtkegels 5 die Straße trifft, von der vorderen Fahrzeugachse kleiner als der entsprechende Wert d in Figur 3A.

Dies bedeutet, dass wenn in der Situation in Figur 3B die Nickbewegung nicht berücksichtigt wird und ein Abstand eines Objekts 7 anhand der Kameradaten ermittelt wird, der Abstand eine Objekts, das aktuell von der Mitte 6 des Sichtkegels getroffen wird, um den Betrag (d-d') weiter weg erscheint als es tatsächlich ist.

Folglich wird in diesem Fall der ermittelte Abstand d', der jeweils einem Objekt oder einer Fahrbahnänderung zugeordnet wird, hin zu einem kleineren Wert korrigiert.

Umgekehrt verhält es sich entsprechend bei positivem Nickwinkel. Diese Situation ist in Figur 3C dargestellt. In diesem Fall erscheint der Abstand d" zwischen dem Mittelpunkt des Sichtkegels 5 und der vorderen Achse größer als bei einem Nickwinkel von null. Wird der Nickwinkel bei der Auswertung der Kamerabilder nicht berücksichtigt, dann erscheinen Objekte näher zu sein, als sie es tatsächlich sind, da sie früher vom Kamerasystem erfasst werden. Folglich wird in diesem Fall ein ermittelter Abstand d" des Objekts 7 hin zu größeren Werten korrigiert.

Folglich wird in Schritt S3 nach Erfassung des Nickwinkels α der Abstandswert zu einem erfassten Objekt oder zu der erfassten Änderung der Straßenoberfläche in Schritt S3 korrigiert. Hierzu ist in der Steuervorrichtung 3 eine entsprechende Korrekturfomel hinterlegt, mit der in Abhängigkeit von dem erfassten Nickwinkel die aus den Bilddaten der Kamera ermittelte Abstandsgröße korrigiert wird.

Analog zu den Abstandswerten wird ohne Berücksichtigung des Nickwinkels auch die entsprechende Größenangabe, die jeweils einem Objekt zugeordnet ist, verfälscht, da sich in Abhängigkeit von dem Nickwinkel auch der Durchmesser 8 des Sichtkegels ändert. Daher kann in Schritt S3 auch die Objektgröße korrigiert werden. Wie in Figur 3C dargestellt, vergrößert sich der auf die Straße auftreffende Durchmesser des Sichtkegels 5 bei positivem Nickwinkel. In diesem Fall erscheinen Objekte, die sich innerhalb des Sichtkegels befinden, kleiner als im Normalzustand der Figur 3A. Folglich wird bei positivem Nickwinkel die Objektgröße nach oben korrigiert. Entsprechend wird die Objektgröße im Falle eines negativen Nickwinkels nach unten korrigiert.

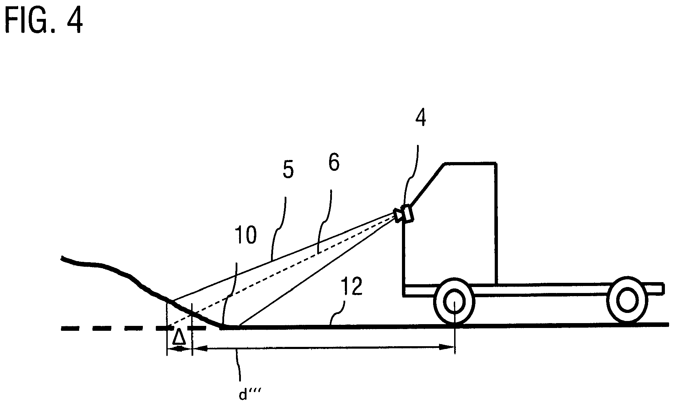

Ferner ist es möglich, mit den Kartendaten aus einem Navigationssystem eine Plausibilisierung mit den Daten des Kamerasystems durchzuführen, um die Güte der Signalauswertung für den Fahrbahnlauf weiter zu steigern. Dies ist in Figur 4 beispielhaft dargestellt. Steigt beispielsweise die Fahrbahn vor dem Fahrzeug an, so können dadurch ebenfalls die Entfernung d'" zum Objekt und die Objektgröße falsch berechnet werden. Wird in der Situation der Figur 4 beispielsweise die im Punkt 10 beginnende Fahrbahnsteigung nicht berücksichtigt, wird ein Abstand eines im Mittelpunkt des Sichtkegels 5 befindlichen Objekts oder einer Fahrbahnänderung auf den zu hohen Wert (d'''+Δ) geschätzt. Dies kann entsprechend korrigiert werden, wenn aus Kartendaten bekannt ist, dass der Sichtkegel aktuell auf eine Steigung trifft.

Die so in Schritt S3 korrigierten Straßeninformationen geben die exakte Position und/oder den Abstand zu Objekten und/oder Fahrbahnänderungen im vorausliegenden Streckenabschnitt an.

In Schritt S4 wird anschließend in Abhängigkeit von den bestimmten Straßeninformationen bestimmt, ob eine präventive Anpassung der Dämpferkraft notwendig ist und wie diese aussehen müsste.

In der Steuervorrichtung 3 sind hierzu in an sich bekannter Weise vorbestimmte Anpassungsvorschriften für die Dämpfer 2 hinterlegt, aus denen eine geeignete Anpassung der Dämpferkraft der Dämpfer 2 in Abhängigkeit von den bestimmten Straßeninformationen ableitbar ist, um z. B. die Dämpferkraft der Dämpfer 2 rechtzeitig vor dem Erreichen des Objekts 7 so einzustellen, dass entweder der Komfort bei Überfahren des Objekts 7 gesteigert wird und/oder die Fahrwerksbelastung gesenkt werden kann.

Nachdem die Höhe und der Zeitpunkt Anpassung der Dämpferkraft in Schritt S4 bestimmt wurden, erfolgt dann in Schritt S5 eine präventive Anpassung der Dämpfereinstellung vor Erreichen des vorausliegenden Objekts oder der vorausliegen Änderung der Straßenoberfläche. Die Schritte S4 und S5 sind an sich aus dem Stand der Technik bekannt und werden daher vorliegend nicht näher beschrieben. Lediglich beispielhaft wird auf die in den eingangs zitierten Druckschriften offenbarten Ansätze verwiesen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Fahrzeug, insbesondere Nutzfahrzeug
- 2: Semiaktiver Stoßdämpfer
- 3: Steuervorrichtung
- 4: Kamera
- 5: Sichtkegel
- 6: Mittellinie des Sichtkegels
- 7: Objekt, zum Beispiel Schlagloch, Bodenwelle
- 8: Durchmesser Sichtkegel
- 9: Fahrzeugaufbaulängsachse
- 10: Beginn der Steigung
- 11: Fahrzeugaufbau
- 12: Vorausliegendes Straßensegment
- α: Nickwinkel
- d, d', d", d''': Abstand Mittelpunkt des Sichtkegels zum Fahrzeug

## Patentansprüche

1. Verfahren zur Anpassung der Dämpferkraft verstellbarer Dämpfer (2) eines Feder-Dämpfer-Systems in Kraftfahrzeugen (1), insbesondere in Nutzfahrzeugen mit semiaktiven Dämpfersystemen, wobei die Anpassung in Abhängigkeit von mindestens einer Straßeninformation erfolgt, die unter Verwendung der Ausgabedaten mindestens einer Kamera (4) ermittelt wird und die ein Objekt (7) und/oder eine Änderung der Straßenoberfläche in einem in Fahrtrichtung des Kraftfahrzeugs (1) vorausliegenden Straßensegment (12) betreffen (S1),
**dadurch gekennzeichnet,**
**dass** eine Distanzinformation, die einen Abstand (d) des Objekts (7) und/oder der Änderung der Straßenoberfläche angibt, in Abhängigkeit von einem Nickwinkel (α) des Fahrzeugaufbaus (11) bezüglich einer Fahrzeugaufbaulängsachse (9) bestimmt wird, wobei
a) der aus den Ausgabedaten der mindestens einen Kamera (4) ermittelter Abstand (d) des Objekts (7) und/oder der Änderung der Straßenoberfläche bei einem negativen Nickwinkel (α) hin zu einem kleineren Wert und bei einem positiven Nickwinkel (α) hin zu einem größeren Wert korrigiert wird und
b) der Nickwinkel (α) aus den Ausgabesignalen mindestens eines Federwegsensors einer Federungseinrichtung des Fahrwerks ermittelt wird (S2; S3).

2. Verfahren nach Anspruch 1, **dadurch gekennzeichnet,**
a) **dass** die ermittelten Straßeninformationen eine Objektgröße des Objekts (7) umfassen; und
b) **dass** die Objektgröße in Abhängigkeit von dem Nickwinkel (α) des Fahrzeugaufbaus (11) ermittelt wird.

3. Verfahren nach einem der vorhergehenden Ansprüche, **dadurch gekennzeichnet, dass** der Nickwinkel (α) in Abhängigkeit von Ausgabesignalen mindestens eines Beschleunigungssensors zur Erfassung einer Beschleunigung des Fahrzeugaufbaus (11) ermittelt wird.

4. Verfahren nach Anspruch 3, **dadurch gekennzeichnet,**
a) **dass** in Abhängigkeit von den Ausgabesignalen des mindestens einen Beschleunigungssensors ermittelt wird, ob eine Ausfederungsbewegung des Fahrzeugaufbaus oder ob eine Nickbewegung vorliegt; und
b) **dass** ein Wert des Nickwinkels (α) in Abhängigkeit von den Ausgabesignalen des Federwegsensors ermittelt wird.

5. Verfahren nach einem der vorhergehenden Ansprüche, **dadurch gekennzeichnet,**
a) **dass** anhand von Kartendaten eine Steigungsinformation ermittelt wird, die eine Steigung oder einen Steigungsverlauf des vorausliegenden Straßensegments (12) angibt; und
b) **dass** in Abhängigkeit von der Steigungsinformation die Distanzinformation und/oder eine Objektgröße des Objekts korrigiert wird.

6. Verfahren nach einem der vorhergehenden Ansprüche, **gekennzeichnet durch**
a) Bestimmung einer präventiven Anpassung der Dämpferkraft der verstellbaren Dämpfer in Abhängigkeit von der mindestens einen Straßeninformation (S4); und
b) Ausführung der präventiven Anpassung der Dämpferkraft, bevor das Fahrzeug das Objekt und/oder die Änderung der Straßenoberfläche in dem vorausliegenden Straßensegment (12) antrifft (S5).

7. Verfahren nach einem der vorhergehenden Ansprüche, **dadurch gekennzeichnet,**
a) **dass** das Objekt (7) ein Schlagloch, eine Bodenwelle oder ein auf der Straße liegender Gegenstand ist; und/oder
b) **dass** der verstellbare Dämpfer (2) ein semiaktiver Stoßdämpfer eines Fahrwerks ist, insbesondere ein Dämpfer mit kontinuierlicher Dämpfungssteuerung.

8. Vorrichtung (3) zur Anpassung der Dämpferkraft verstellbarer Dämpfer (2) eines Feder-Dämpfer-Systems eines Kraftfahrzeugs (1), insbesondere eines Nutzfahrzeugs (1) mit semiaktiven Dämpfersystemen, wobei die Vorrichtung eingerichtet ist, unter Verwendung von Ausgabedaten mindestens einer Kamera (4) mindestens eine Straßeninformation zu ermitteln, die ein Objekt und/oder eine Änderung der Straßenoberfläche in einem in Fahrtrichtung des Kraftfahrzeugs (1) vorausliegenden Straßensegment (12) betreffen,
**dadurch gekennzeichnet,**
**dass** die Vorrichtung eingerichtet ist, eine Distanzinformation, die eine Position, einen Abstand (d) und/oder eine Zeit bis zum Erreichen des Objekts und/oder der Änderung der Straßenoberfläche angibt, in Abhängigkeit von einem Nickwinkel des Fahrzeugaufbaus bezüglich einer Aufbaulängsachse zu ermitteln und den Nickwinkel (α) aus den Ausgabesignalen mindestens eines Federwegsensors einer Federungseinrichtung des Fahrwerks zu ermitteln, wobei die Vorrichtung eingerichtet ist, den aus den Ausgabedaten der mindestens einen Kamera (4) ermittelten Abstand (d) des Objekts (7) und/oder der Änderung der Straßenoberfläche bei einem negativen Nickwinkel (α) hin zu einem kleineren Wert und bei einem positiven Nickwinkel (α) hin zu einem größeren Wert zu korrigieren.

9. Vorrichtung nach Anspruch 8, **dadurch gekennzeichnet,**
a) **dass** die Vorrichtung eingerichtet ist, eine präventive Anpassung der Dämpferkraft der verstellbaren Dämpfer (2) in Abhängigkeit von der mindestens einen Straßeninformation zu bestimmen; und
b) **dass** die Vorrichtung eingerichtet ist, eine Stelleinrichtung des Dämpfers (2) zur Ausführung der präventiven Anpassung der Dämpferkraft anzusteuern, bevor das Fahrzeug (1) das Objekt und/oder die Änderung der Straßenoberfläche in dem vorausliegenden Straßensegment (12) antrifft.

10. Kraftfahrzeug (1), insbesondere Nutzfahrzeug, mit einer Vorrichtung (3) nach Anspruch 8 oder 9.

## Claims

1. A method for adapting the damper force of adjustable dampers (2) of a spring-damper system in motor vehicles (1), in particular in utility vehicles with semi-active damper systems, wherein the adaptation takes place as a function of at least one road information item which is determined using the output data of at least one camera (4) and which relates (S1) to an object (7) and/or a change in the road surface in a road segment (12) which lies ahead in the direction of travel of the motor vehicle (1),
**characterized**
**in that** a distance information item which specifies a distance (d) from the object (7) and/or from the change in the road surface is determined as a function of a pitch angle (α) of the vehicle body (11) with respect to a vehicle body longitudinal axis (9),
wherein
a) the distance (d) of the object (7) and/or of the change in the road surface, determined from the output data of the at least one camera (4), is corrected to a smaller value when there is a negative pitch angle (α) and to a larger value when there is a positive pitch angle (α), and
b) the pitch angle (α) is determined (S2; S3) from the output signals of at least one spring travel sensor of a suspension device of the chassis.

2. The method according to Claim 1, **characterized**
a) **in that** the determined road information comprises an object size of the object (7); and
b) **in that** the object size is determined as a function of the pitch angle (α) of the vehicle body (11).

3. The method according to one of the preceding claims, **characterized in that** the pitch angle (α) is determined as a function of output signals of at least one acceleration sensor for detecting an acceleration of the vehicle body (11).

4. The method according to Claim 3, **characterized**
a) **in that** it is determined as a function of the output signals of the at least one acceleration sensor whether a rebound movement of the vehicle body or whether a pitching movement is present; and
b) **in that** a value of the pitch angle (α) is determined as a function of the output signals of the spring travel sensor.

5. The method according to one of the preceding claims, **characterized**
a) **in that** a gradient information item which specifies a gradient or a gradient profile of the road segment (12) lying ahead is determined on the basis of map data; and
b) **in that** the distance information item and/or an object size of the object are/is corrected as a function of the gradient information item.

6. The method according to one of the preceding claims, **characterized by**
a) determination of preventative adaptation of the damper force of the adjustable dampers as a function of the at least one road information item (S4);
and
b) execution of the preventative adaptation of the damper force before the vehicle arrives (5) at the object and/or at the change in the road surface in the road segment (12) lying ahead.

7. The method according to one of the preceding claims, **characterized**
a) **in that** the object (7) is a pothole, an unevenness in the ground or an object lying on the road; and/or
b) **in that** the adjustable damper (2) is a semi-active shock absorber of a chassis, in particular a damper with continuous damping control.

8. A device (3) for adapting the damper force of adjustable dampers (2) of a spring-damper system of a motor vehicle (1), in particular a utility vehicle (1) with semi-active damper systems, wherein the device is configured to determine, using output data of at least one camera (4), at least one road information item which relates to an object and/or a change in the road surface in a road segment (12) which lies ahead in the direction of travel of the motor vehicle (1),
**characterized**
**in that** the device is configured to determine, as a function of a pitch angle of the vehicle body with respect to a body longitudinal axis, a distance information item which relates to a position, to a distance (d) and to a time up to when the object and/or the change in the road surface is reached, and to determine the pitch angle (α) from the output signals of at least one spring travel sensor of a suspension device of the chassis, wherein the device is configured to correct the distance (d), determined from output data from the at least one camera (4), from the object (7) and/or from the change in the road surface to a smaller value when there is a negative pitch angle (α) and to a larger value where there is a positive pitch angle (α).

9. The device according to Claim 8, **characterized**
a) **in that** the device is configured to determine preventive adaptation of the damper force of the adjustable dampers (2) as a function of the at least one road information item; and
b) **in that** the device is configured to actuate an actuating device of the damper (2) in order to carry out the preventive adaptation of the damper force before the vehicle (1) arrives at the object and/or the change in the road surface in the road segment (12) lying head.

10. A motor vehicle (1), in particular utility vehicle, having a device (3) according to Claim 8 or 9.

## Revendications

1. Procédé de réglage de la force d'amortissement d'amortisseurs réglables (2) d'un système d'amortissement à ressort de véhicules automobiles (1), en particulier de véhicules utilitaires équipés de systèmes d'amortissement semi-actifs,
l'adaptation étant effectuée en fonction d'au moins une information de route qui est déterminée à l'aide des données de sortie d'au moins une caméra (4) et qui concernent un objet (7) et/ou une variation de la surface de la route dans une portion de route (12) située en avant par référence au sens de roulement du véhicule automobile (1) (S1), **caractérisé en ce que** une information de distance indiquant une distance (d) de l'objet (7) et/ou la variation de la surface de la route est déterminée en fonction d'un angle d'inclinaison (α) de la carrosserie du véhicule (11) par rapport à l'axe longitudinal (9) de la carrosserie du véhicule,
a) la distance (d) de l'objet (7), déterminée à partir des données de sortie de l'au moins une caméra (4), et/ou la variation de la surface de la route est corrigée à une valeur plus petite lorsque l'angle d'inclinaison longitudinale (α) est négatif et à une valeur plus grande lorsque l'angle d'inclinaison longitudinale (α) est positif et
b) l'angle d'inclinaison longitudinale (α) est déterminé à partir des signaux de sortie d'au moins un capteur de course de ressort d'un dispositif de suspension du mécanisme de roulement (S2 ; S3).

2. Procédé selon la revendication 1, **caractérisé en ce que**
a) les informations de route déterminées comprennent la dimension de l'objet (7) ; et
b) la dimension de l'objet est déterminée en fonction de l'angle d'inclinaison longitudinale (α) de la carrosserie (11) du véhicule.

3. Procédé selon l'une des revendications précédentes, **caractérisé en ce que** l'angle d'inclinaison longitudinale (α) est déterminé en fonction des signaux de sortie d'au moins un capteur d'accélération destiné à détecter une accélération de la carrosserie (11) du véhicule.

4. Procédé selon la revendication 3, **caractérisé en ce que**
a) en fonction des signaux de sortie de l'au moins un capteur d'accélération on détermine s'il s'agit d'un mouvement de débattement de la carrosserie du véhicule ou d'un mouvement d'inclinaison longitudinale ; et
b) une valeur de l'angle d'inclinaison longitudinale (α) est déterminée en fonction des signaux de sortie du capteur de course du ressort.

5. Procédé selon l'une des revendications précédentes, **caractérisé en ce que**
a) une information de pente est déterminée à partir des données de carte, laquelle indique une pente ou une allure de pente de la portion de route (12) située en avant ; et
b) l'information de distance et/ou la dimension de l'objet sont corrigées en fonction de l'information de pente.

6. Procédé selon l'une des revendications précédentes, **caractérisé en ce que**
a) un réglage préventif de la force d'amortissement de l'amortisseur réglable est déterminé en fonction de l'au moins une information de route (S4) ; et
b) le réglage préventif de la force d'amortissement est effectué avant que le véhicule ne rencontre l'objet et/ou la variation de la surface de la route dans la portion de route (12) située en avant (S5).

7. Procédé selon l'une des revendications précédentes, **caractérisé en ce que**
a) l'objet (7) est un nid-de-poule, une bosse ou un objet placé sur la route ; et/ou
b) l'amortisseur réglable (2) est un amortisseur semi-actif d'un mécanisme de roulement, en particulier un amortisseur à commande d'amortissement continue.

8. Dispositif (3) de réglage de la force d'amortissement d'amortisseurs réglables (2) d'un système d'amortissement à ressort d'un véhicule automobile (1), en particulier d'un véhicule utilitaire (1) comportant des systèmes d'amortissement semi-actifs,
le dispositif étant adapté pour déterminer au moins une information de route à l'aide de données de sortie d'au moins une caméra (4), qui concernent un objet et/ou une variation de la surface de la route dans une portion de route (12) située en avant par référence à la direction de roulement du véhicule automobile (1), **caractérisé en ce que**
le dispositif est adapté pour déterminer une information de distance indiquant une position, une distance (d) et/ou un temps nécessaires pour atteindre l'objet et/ou la variation de la surface de la route en fonction d'un angle d'inclinaison longitudinale de la carrosserie du véhicule par rapport à son axe longitudinal et pour déterminer l'angle d'inclinaison longitudinale (α) à partir des signaux de sortie d'au moins un capteur de course de ressort d'un dispositif de suspension du mécanisme de roulement,
le dispositif étant adapté pour corriger la distance (d) de l'objet (7), déterminée à partir des données de sortie de l'au moins une caméra (4), et/ou la variation de la surface de la route à une valeur plus petite lorsque l'angle d'inclinaison longitudinale (α) est négatif et à une valeur plus grande lorsque l'angle d'inclinaison longitudinale (α) est positif.

9. Dispositif selon la revendication 8, **caractérisé en ce que**
a) le dispositif est adapté pour déterminer un réglage préventif de la force d'amortissement de l'amortisseur réglable (2) en fonction de l'au moins une information de route ; et
b) le dispositif est adapté pour commander un moyen de réglage de l'amortisseur (2) afin d'effectuer le réglage préventif de la force d'amortisseur avant que le véhicule (1) ne rencontre l'objet et/ou la variation de la surface de la route dans la portion de route (12) située en avant.

10. Véhicule automobile (1), en particulier véhicule utilitaire, équipé d'un dispositif (3) selon la revendication 8 ou 9.
